# EUROPÄISCHE PATENTSCHRIFT

(11) **EP 1 910 144 B1**
(45) Veröffentlichungstag und Bekanntmachung des Hinweises auf die Patenterteilung: **22.07.2009**
(21) Anmeldenummer: 06776451.4
(22) Anmeldetag: 27.07.2006
(51) Int. Cl.: B60T 17/08

(54) **KOMBINIERTER BETRIEBSBREMS- UND FEDERSPEICHERBREMSZYLINDER MIT INNERER ENTLÜFTUNG**
COMBINED SERVICE BRAKE AND SPRING BRAKE CYLINDER WITH INTERNAL VENTILATION
CYLINDRE COMBINE DE FREIN A ACCUMULATION ET DE FREIN DE SERVICE A VENTILATION INTERNE

(30) Priorität: 27.07.2005 DE 102005035787
(43) Veröffentlichungstag der Anmeldung: 16.04.2008
(73) Patentinhaber: KNORR-BREMSE SYSTEME FÜR NUTZFAHRZEUGE GMBH, 80909 München (DE)
(72) Erfinder: SCHODROWSKI, Antony, F-14100 Lisieux (FR); LE MER, Sébastian, F-14140 Auquainville (FR)
(74) Vertreter: Mattusch, Gundula
(86) Internationale Anmeldenummer: PCT/EP2006/007438
(87) Internationale Veröffentlichungsnummer: WO 2007/012489

(56) Entgegenhaltungen:
- EP-A- 0 020 862
- EP-A- 0 025 558
- EP-A- 0 279 930
- EP-A- 0 554 050
- GB-A- 1 237 641

## Beschreibung

### Stand der Technik

Die Erfindung geht aus von einem kombinierten Betriebsbrems- und Federspeicherbremszylinder mit einer in einem Gehäuse des Betriebsbremszylinders angeordneten druckbeaufschlagbaren Membran, welche auf der einen Seite eine mit einem Betriebsbremsdruck beaufschlagbare Betriebsbremskammer und auf der anderen Seite eine Rückholfeder aufnehmende Kammer begrenzt, einem in einem Gehäuse des Federspeicherbremszylinders angeordneten, durch eine Speicherfeder betätigbaren Federspeicherbremskolben, welcher auf der einen Seite eine Federspeicherbremskammer und auf der anderen Seite eine eine Speicherfeder aufnehmende Federkammer begrenzt und eine Kolbenstange aufweist, welche ein Entlüftungsventil trägt, das eine Strömungsverbindung zwischen der Federkammer und der Betriebsbremskammer herstellt oder sperrt, wobei das Entlüftungsventil einen mit einem Ventilsitz zusammenwirkenden Kolben beinhaltet, welcher durch den Druck in der Federkammer In Öffnungsstellung belastet ist und welcher in seiner vom Ventilsitz abgehobenen Stellung einen Strömungsquerschnitt freigibt, gemäß dem Oberbegriff von Anspruch 1.

Ein solcher kombinierter Betriebsbrems- und Federspeicherbremszylinder ist beispielsweise aus der DE 40 11 739 A1 oder EP-A-0 554 050 bekannt. Das Entlüftungsventil ist dort endseitig im hohlen Kolbenrohr des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Feststellbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern wird über den Be- und Entlüftungsweg der Betriebsbremskammer. Deshalb spricht man in diesem Zusammenhang auch von innerer Entlüftung.

Beim Anfahren an einer ansteigenden Fahrstrecke ist es jedoch notwendig, nach oder während des Lösens der Feststellbremse wenigstens kurzzeitig zusätzlich die Betriebsbremse zuzuspannen, um ein Zurückrollen des Fahrzeugs zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort entweicht sie über die Kolbendichtung und die Gehäusedichtung in die Atmosphäre, was zum einen störende Geräusche verursacht. Zum andern steht das über das Zum ändern steht das über das Entlüftungsventil abströmende Luftvolumen nicht mehr zum Aufbau der Betriebsbremskraft zur Verfügung.

Der vorliegenden Erfindung liegt die Aufgabe zugrunde, einen kombinierten Betriebsbrems- und Federspeicherbremszylinder der eingangs erwähnten Art derart weiter zu entwickeln, dass die oben genannten Nachteile vermieden werden.

Diese Aufgabe wird erfingdungsgemäß durch die Merkmale von Anspruch 1 gelöst.

### Vorteile der Erfindung

Die Erfindung basiert auf dem Gedanken, dass das Entlüftungsventil wenigstens einen weiteren, mit einem weiteren Ventilsitz zusammenwirkenden und durch den Druck in der Federkammer in Öffnungsstellung und durch den Druck in der Betriebsbremskammer in Schließstellung belasteten Kolben beinhaltet, welcher in seiner vom weiteren Ventilsitz abgehobenen Stellung wenigstens einen weiteren Strömungsquerschnitt freigibt, wobei bei zugespannter Feststellbremse und gleichzeitig betätigter Betriebsbremse mit Betriebsbremsdrücken, welche kleiner als eine Druckschwelle sind, und/oder mit Betriebsbremsdruckgradienten, welche kleiner als eine Druckgradientenschwelle sind, der eine Kolben vom Ventilsitz abgehoben ist und der weitere Kolben gegen den weiteren Ventilsitz dichtet. Dann ist wegen des geringeren Strömungsquerschnitts der Volumenstrom oder das Luftvolumen, welches von der Betriebsbremskammer über das teilweise geöffnete Entlüftungsventil in die Federkammer und von dort über die Dichtungen in Freie abströmt geringer als beim Stand der Technik, was sich vorteilhaft auf das Geräuschverhalten und den Luftverbrauch auswirkt.

Durch die in den Unteransprüchen aufgeführten Maßnahmen sind vorteilhafte Weiterbildungen und Verbesserungen der in den unabhängigen Ansprüchen angegebenen Erfindung möglich.

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine Schnittdarstellung eines kombinierten Betriebsbrems- und Federspeicherbremszylinders gemäß einer bevorzugten Ausführungsform der Erfindung;
- Fig.2: eine Querschnittsdarstellung eines Entlüftungsventils des kombinierten Betriebsbrems- und Federspeicherbremszylinders von Fig.1 in Schließstellung;
- Fig.3: eine Querschnittsdarstellung des Entlüftungsventils von Fig.2 in teilweise geöffneter Stellung;
- Fig.4: eine Querschnittsdarstellung des Entlüftungsventils von Fig.2 in vollständig geöffneter Stellung
- Fig.5: eine Querschnittsdarstellung einer weiteren Ausführungsform eines Entlüftungsventils;

### Beschreibung der Ausführungsbeispiele

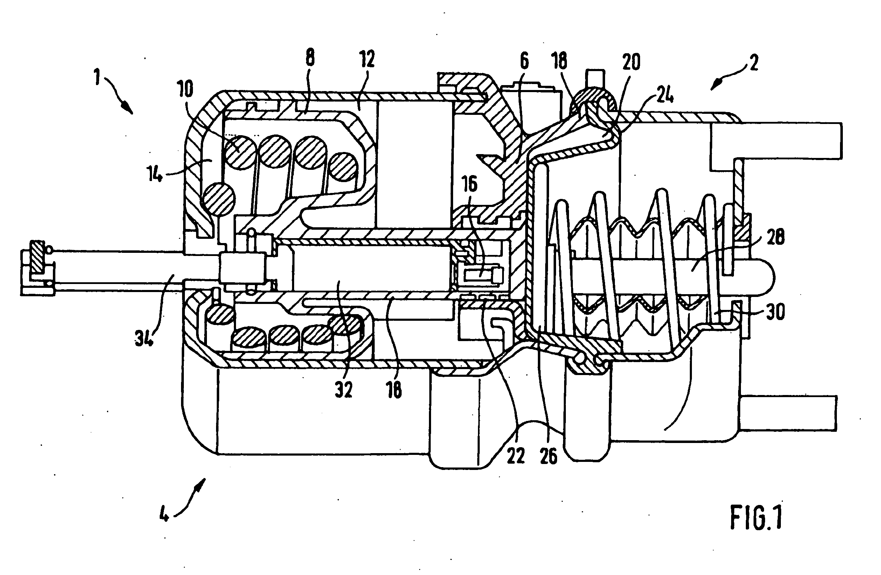

In Fig.1 ist zur beispielhaften Erläuterung der Erfindung ein kombinierter Betriebsbrems- und Federspeicherbremszylinder 1, nachfolgend Kombizylinder genannt, dargestellt. Der Kombizylinder besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Kolbenstange 18 verbunden, welche sich durch die Zwischenwand 6 in eine Betriebsbremskammer 20 des Betriebsbremszylinders 2 erstreckt. Eine in der Zwischenwand 6 eingesetzte Dichtung 22 dichtet gegenüber der Außenwand der Kolbenstange 18 während deren Längsbewegung ab. In die Betriebsbremskammer 20 mündet ein Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegengesetzter Seite ein Druckstück in Form eines Membrantellers 26 vorgesehen ist. Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Eine sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Das Entlüftungsventil 16 ist in dem vom Federspeicherbremskolben 8 weg weisenden Ende der Kolbenstange 18 angeordnet und genauer in deren Innenraum 32 aufgenommen. Dort ist zwar weiterhin eine hier nicht weiter interessierende Notlöseinrichtung 34 angeordnet, jedoch kann der Innenraum 32 der Kolbenstange 18 mit der Federkammer 14 kommunizieren.

Das Entlüftungsventil 16 beinhaltet einen mit einem Ventilsitz 36 zusammenwirkenden Kolben 38, welcher durch den Druck in der Federkammer 14 in Öffnungsstellung belastet ist und welcher in seiner vom Ventilsitz 36 abgehobenen Stellung einen Strömungsquerschnitt freigibt, sowie wenigstens einen weiteren, mit einem weiteren Ventilsitz 40 zusammenwirkenden Kolben 42, welcher durch den Druck in der Federkammer 14 in Öffnungsstellung und durch den Druck in der Betriebsbremskammer 20 in Schließstellung belastet ist und in seiner vom weiteren Ventilsitz 40 abgehobenen Stellung wenigstens einen weiteren Strömungsquerschnitt freigibt.

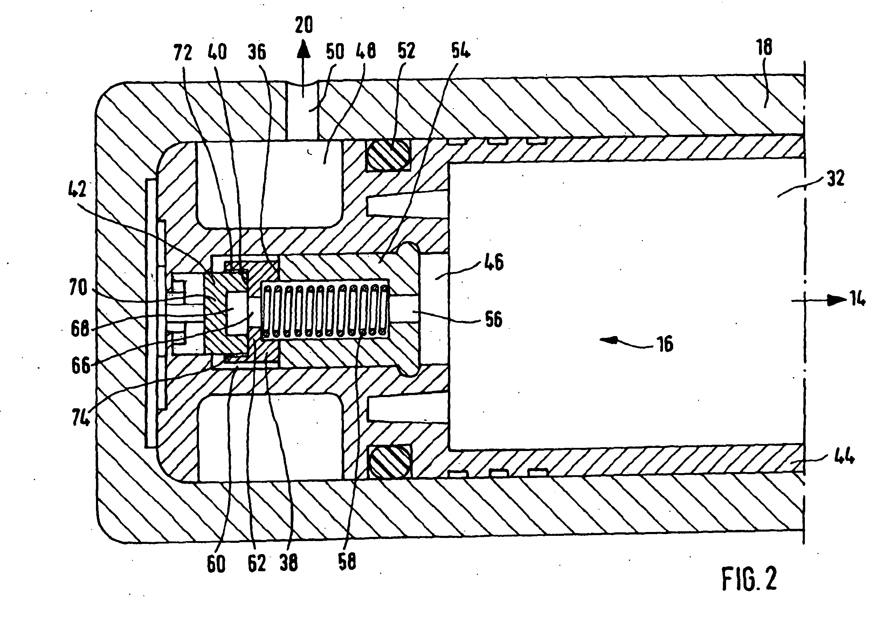

Dies kann beispielsweise durch ein gegenständliches Entlüftungsventil 16 gemäß Fig.2 realisiert sein, welches ein in der Kolbenstange 18 aufgenommenes rohrförmiges Ventilgehäuse 44 aufweist, innerhalb welchem die beiden Kolben 38, 42 axial beweglich geführt sind. Das Ventilgehäuse 44 weist außerdem eine zentrale Durchgangsbohrung 46 sowie eine mit dieser in Verbindung stehende, nach radial außen offene Ringkammer 48 auf, welche über radiale Bohrungen 50 in der Wandung der Kolbenstange 18 mit der Betriebsbremskammer 20 in Strömungsverbindung bringbar ist. Die Ringkammer 48 ist durch einen in einer radial äußeren Umfangsnut aufgenommenen O-Ring 52 gegenüber der Kolbenstange 18 abgedichtet.

An dem zur Federkammer 14 weisenden Ende der zentralen Durchgangsbohrung 46 des Ventilgehäuses 44 ist ein buchsenartiger Ventilkörper 54 aufgenommen, an dessen von der Federkammer 14 weg weisenden Stirnfläche der Ventilsitz 36 für den einen Kolben 38 ausgebildet ist, gegen welchen dieser mit seiner Stirnfläche anschlagbar bzw. von diesem weg bewegbar ist, um den einen Strömungsquerschnitt des Entlüftungsventils 16 zu verschließen bzw. zu öffnen. Der Ventilkörper 54 ist becherförmig ausgebildet, wobei sein mit einer zentralen Durchgangsbohrung versehener Boden zur Federkammer 14 hin weist. Der eine Kolben 38 ist durch ein Federelement 58, welches sich am Boden des Ventilkörpers 54 abstützt in Öffnungsrichtung vorgespannt. Weiterhin ist zwischen der radial äußeren Umfangsfläche des einen Kolbens 38 und einer radial inneren Umfangsfläche der zentralen Durchgangsbohrung 46 des Ventilgehäuses 44 ein Ringspalt 60 ausgebildet.

Der eine Kolben 38 hat ein T-förmiges Profil mit einem Mittelsteg 62, in welchem eine zentrale Durchgangsbohrung 66 ausgebildet ist. Die Fläche dieses Mittelstegs 62 abzüglich der Fläche dieser Bohrung 66 bildet eine Wirkfläche für den in der Federkammer 14 anstehenden Druck. Eine Druckkammer 68 wird zumindest teilweise von dem weiteren, becherförmig ausgebildeten Kolben 42 begrenzt. Eine Öffnung dieses weiteren Kolbens 42 weist zu dem einen Kolben 38 hin, wobei seine endseitige Stirnfläche gegen eine Kolbenfläche des einen Kolbens 38 anschlagbar sind, an welcher zugleich der weitere Ventilsitz 40 ausgebildet ist. Der weitere Kolben 42 kann folglich den einen Kolben bei einer Bewegung gegen den in der Federkammer 14 herrschenden Druck mitnehmen.

Genauer ist die Druckkammer 68 zwischen dem Mittelsteg 62 des einen Kolbens 38 und einem Boden 70 des weiteren Kolbens 42 ausgebildet, welche einerseits über die zentrale Durchgangsbohrung 66 des einen Kolbens 38 und die zentrale Durchgangsbohrung 56 des Ventilkörpers 54 mit der Federkammer 14 kommunizieren kann. Die Fläche dieses Bodens 70 bildet dann eine Wirkfläche für den in der Federkammer 14 anstehenden Druck. Die andere Wirkfläche des weiteren Kolbens 42 ist durch den Betriebsbremsdruck in der Betriebsbremskammer 20 belastet und wird durch die Rückseite des Bodens 70 gebildet. Der andere Kolben 42 ist vorzugsweise in dem einen Kolben 38 sowie an der zentralen Durchgangsbohrung 46 des Ventilgehäuses 44 axial geführt.

Auch zwischen der radial äußeren Umfangsfläche des weiteren Kolbens 42 und der radial inneren Umfangsfläche des einen Kolbens 38 ist ein Strömungsquerschnitt in Form eines Ringspalts 72 ausgebildet. Schließlich ist auch zwischen einer radial äußeren Umfangsfläche des weiteren Kolbens 42 und der radial inneren Umfangsfläche der Durchgangsbohrung 46 des Ventilgehäuses 44 ein weiterer Ringspalt 74 ausgebildet, welcher einen weiteren Strömungsquerschnitt des Entlüftungsventils 1 darstellt.

Die beiden Kolben 38, 42 des Entlüftungsventils 16 sind abhängig von den an ihren Wirkflächen anstehenden Drücken schaltbar, d.h. gegen ihre zugeordneten Ventilsitze 36, 40 in Dichtstellung oder von diesen weg in Öffnungsstellung, wobei die beiden Kolben 38, 40 unabhängig voneinander druckbetätigbar sind. In Fig.2 ist die Situation gezeigt, in welcher beide Kolben 38, 40 jeweils an dem ihnen zugeordneten Ventilsitz 36, 40 anliegen und folglich keine Strömungsverbindung zwischen der Federkammer 14 und der Betriebsbremskammer 20 vorliegt. Diese Stellung stellt sich insbesondere dann ein, wenn zum Anfahren an einer ansteigenden Wegstrecke die Feststellbremse bei entlüfteter Federspeicherbremskammer 12 noch zugespannt ist und die Betriebsbremse mit einer Bremsanforderung betätigt wird, welche einen Betriebsbremsdruck und/oder mit einen Druckgradienten zur Folge hat, der eine Druckschwelle und/oder eine Druckgradientschwelle übersteigt. In diesem Fall ist die Kraft aus dem auf den Boden 70 des weiteren Kolbens 42 anstehenden Betriebsbremsdrucks größer als die Summe aus Federkraft und der aus dem Druck in der Federkammer 14 resultierenden Kraft, insbesondere, weil der Druck in der nun maximal großen Federkammer 14 gering ist.

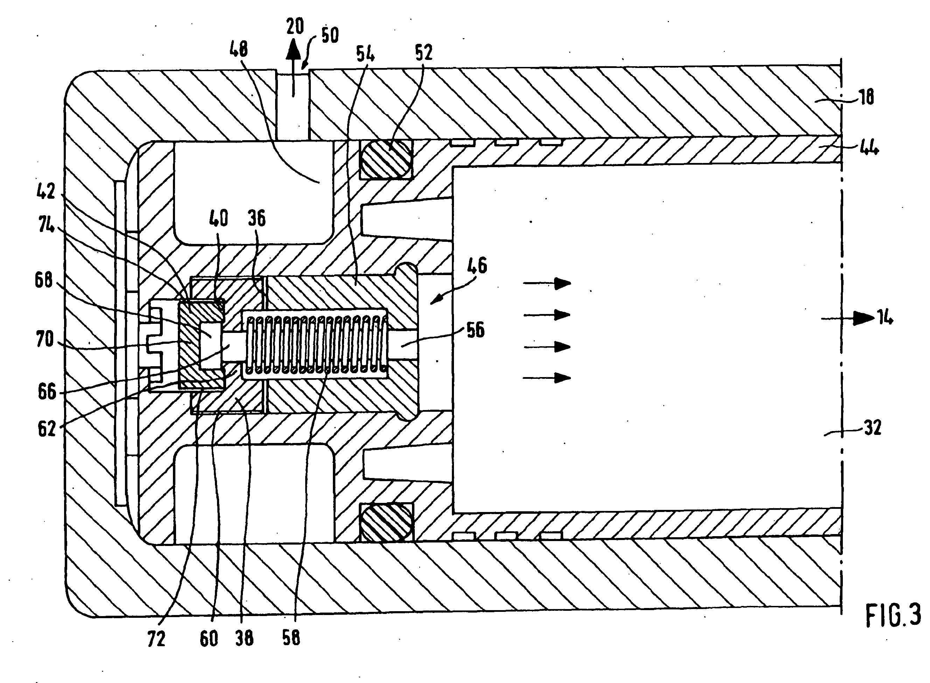

Falls demgegenüber jedoch im Zuge des Anfahrens am Berg die Betriebsbremse mit einer Bremsanforderung betätigt wird, welche einen Betriebsbremsdruck und/oder mit einen Druckgradienten zur Folge hat, der die Druckschwelle und/oder die Druckgradientenschwelle nicht übersteigt, so ist die aus dem Betriebsbremsdruck resultierende und am Boden 70 des weiteren Kolbens 42 anstehende Kraft kleiner als die Summe aus Federkraft und der aus dem Druck in der Federkammer 14 resultierenden Kraft, so dass der eine Kolben 38 von seinem Ventilsitz 36 abhebt und folglich den einen Strömungsquerschnitt freigibt, wie Fig.3 zeigt. Hingegen kontaktiert der weitere Kolben 42 seinen zugeordneten Ventilsitz 40 am einen Kolben 38 weiterhin aufgrund des auf ihn wirkenden Betriebsbremsdrucks. Insgesamt strömt dann durch den einen Strömungsquerschnitt zwar ein Luftvolumen von der Betriebsbremskammer 20 in die Federkammer 14 , jedoch ist dieses wegen des weiterhin gegen seinen Ventilsitz 40 dichtenden weiteren Kolbens 42 vergleichsweise gering.

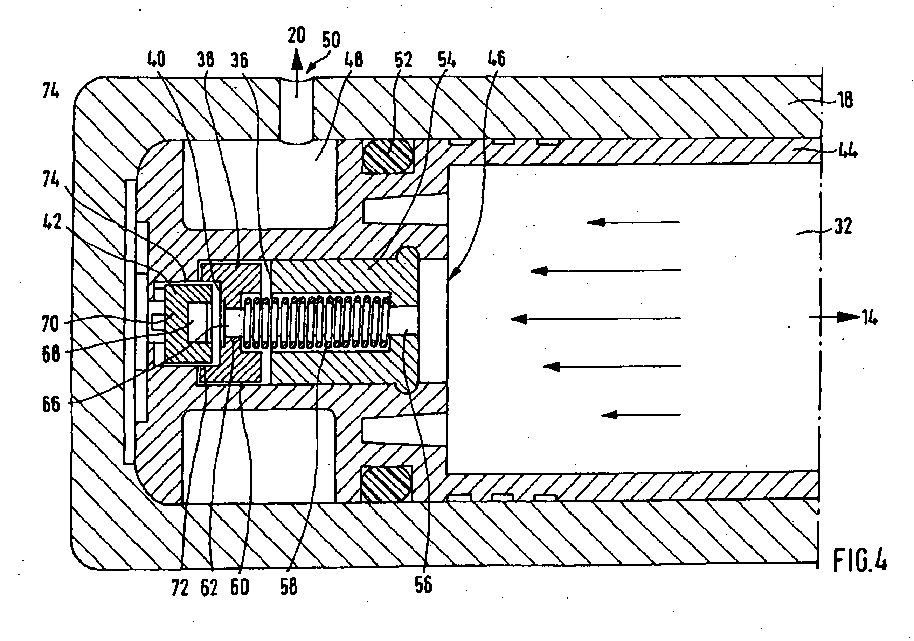

Fig.4 zeigt die Situation, in welcher beide Kolben 38, 42 von ihren Ventilsitzen 36, 40 abgehoben sind und folglich der Strömungsquerschnitt zwischen Federkammer 14 und Betriebsbremskammer 20 maximal ist. Diese Situation ist gegeben, wenn die Feststellbremse bei nicht betätigter Betriebsbremse zugespannt wird und folglich der Federspeicherbremskolben 8 unter schlagartiger Reduzierung des Volumens der Federkammer 14 mit gleichzeitigem Druckanstieg durch die Speicherfeder 10 entspannt wird. Der dann auf die Wirkflächen der beiden Kolben 38, 42 wirkende Druck in der Federkammer 14 ist gegenüber dem Druck in der entlüfteten Betriebsbremskammer 20 so groß, dass beide Kolben 38, 42 in Öffnungsstellung gedrängt werden.

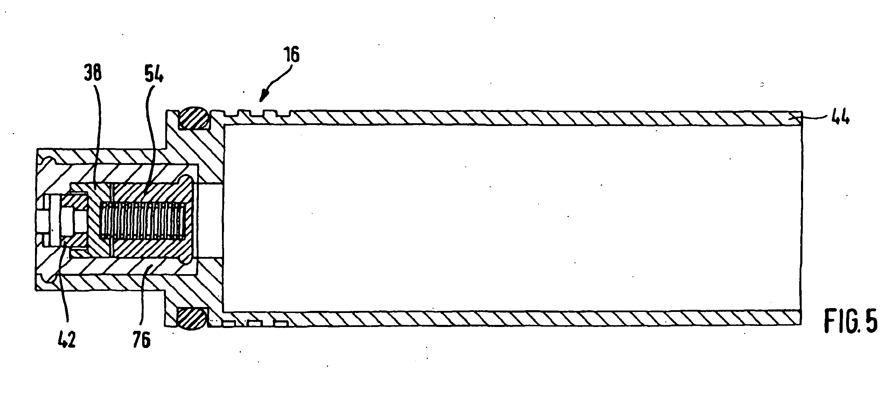

In Fig.5 ist eine weitere Ausführungsform eines Entlüftungsventils 16 gezeigt, bei welcher in das Ventilgehäuse 44 ein Ventilträger 76 eingesetzt ist, in dem der Ventilkörper 54 und die beiden Kolben 38, 42 aufgenommen sind.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbrmskolben
- 10: Speicherfeder
- 12: Federspeicherbrmskammer
- 14: Federkammer
- 16: Entlüftungsventil
- 18: Kolbenstange
- 20: Betriebsbremskammer
- 22: Dichtung
- 24: Membrane
- 26: Membranteller
- 28: Druckstange
- 30: Rückholfeder
- 32: Innenraum
- 34: Notlöseeinrichtung
- 36: Ventilsitz
- 38: Kolben
- 40: Ventilsitz
- 42: Kolben
- 44: Ventilgehäuse
- 46: Durchgangsbohrung
- 48: Ringkammer
- 50: Bohrung
- 52: O-Ring
- 54: Ventilkörper
- 56: Durchgangsbohrung
- 58: Federelement
- 60: Ringspalt
- 62: Mittelsteg
- 66: Durchgangsbohrung
- 68: Druckkammer
- 70: Boden
- 72: Ringspalt
- 74: Ringspalt
- 76: Ventilträger

## Patentansprüche

1. Kombinierter Betriebsbrems- und Federspeicherbremszylinder (1) mit :
a) Einer in einem Gehäuse des Betriebsbremszylinders (2) angeordneten druckbeaufschlagbaren Membran (24), welche auf der einen Seite eine mit einem Betriebsbremsdruck beaufschlagbare Betriebsbremskammer (20) und auf der anderen Seite eine Rückholfeder (30) aufnehmende Kammer begrenzt,
b) einem in einem Gehäuse des Federspeicherbremszylinders (4) angeordneten, durch eine Speicherfeder (10) betätigbaren Federspeicherbremskolben (8), welcher auf der einen Seite eine Federspeicherbremskammer (12) und auf der anderen Seite eine eine Speicherfeder (10) aufnehmende Federkammer (14) begrenzt und eine Kolbenstange (18) aufweist, welche ein Entlüftungsventil (16) trägt, das eine Strömungsverbindung zwischen der Federkammer (14) und der Betriebsbremskammer (20) herstellt oder sperrt, wobei
c) das Entlüftungsventil (16) einen mit einem Ventilsitz (36) zusammenwirkenden Kolben (38) beinhaltet, welcher durch den Druck in der Federkammer (14) in Öffnungsstellung belastet ist und welcher in seiner vom Ventilsitz (36) abgehobenen Stellung einen Strömungsquerschnitt freigibt,
**dadurch gekennzeichnet, dass**
d) das Entlüftungsventil (16) wenigstens einen weiteren, mit einem weitern Ventilsitz (40) zusammenwirkenden, durch den Druck in der Federkammer (14) in Öffnungsstellung und durch den Druck in der Betriebsbremskammer (20) in Schließstellung belasteten Kolben (42) beinhaltet, welcher in seiner vom weiteren Ventilsitz (40) abgehobenen Stellung wenigstens einen weiteren Strömungsquerschnitt freigibt, wobei
e) bei zugespannter Feststellbremse und gleichzeitig betätigter Betriebsbremse mit Betriebsbremsdrücken, welche kleiner als eine Druckschwelle sind, und/oder mit Betriebsbremsdruckgradienten, welche kleiner als eine Druckgradientenschwelle sind, der eine Kolben (38) vom Ventilsitz (36) abgehoben ist und der weitere Kolben (42) gegen den weiteren Ventilsitz (40) dichtet.

2. Betriebsbrems- und Federspeicherbremszylinder nach Anspruch 1, **dadurch gekennzeichnet, dass** der eine Kolben (38) durch wenigstens ein Federelement (58) in Öffnungsrichtung belastet ist.

3. Betriebsbrems- und Federspeicherbremszylinder nach Anspruch 1 oder 2, **dadurch gekennzeichnet, dass** der eine Kolben (38) eine mittige Durchgangsbohrung (66) aufweist, welche die Federkammer (14) mit einer Druckseite des weiteren Kolbens (42) verbindet, dessen andere Druckseite durch den Betriebsbremsdruck belastet ist.

4. Betriebsbrems- und Federspeicherbremszylinder nach Anspruch 3, **dadurch gekennzeichnet, dass** der weitere Kolben (42) an dem einen Kolben (38) axial beweglich geführt ist.

5. Betriebsbrems- und Federspeicherbremszylinder nach wenigstens einem der vorhergehenden Ansprüche, **dadurch gekennzeichnet, dass** die Ventilsitze (36, 40) durch axiale Flächen gebildet werden, gegen welche die Kolben (38, 42) axial anschlagbar sind.

6. Betriebsbrems- und Federspeicherbremszylinder nach Anspruch 5, **dadurch gekennzeichnet, dass** der weitere Ventilsitz (40) an dem einen Kolben (38) ausgebildet ist.

## Claims

1. A combined service brake and spring type brake cylinder (1) having:
a) a diaphragm (24), which is situated in a housing of the service brake cylinder (2) and may be impinged with pressure, and which delimits a service brake chamber (20), which may be impinged with a service brake pressure, on one side and a chamber receiving a return spring (30) on the other side,
b) a spring type brake piston (8), which is situated in a housing of the spring type brake cylinder (4) and is actuatable by a storage spring (10), which delimits a spring type brake chamber (12) on one side and a spring chamber (14) receiving a storage spring (10) on the other side and has a piston rod (18), which carries a ventilation valve (16), which produces or blocks a flow connection between the spring chamber (14) and the service brake chamber (20),
c) the ventilation valve (16) containing a piston (38), working together with a valve seat (36), which is loaded by the pressure in the spring chamber (14) in the open position and which releases a flow cross-section in its position lifted off of the valve seat (36),
**characterized in that**
d) the ventilation valve (16) contains at least one further piston (42), which works together with a further valve seat (40), and is loaded by the pressure in the spring chamber (14) in the open position and by the pressure in the service brake chamber (20) in the closed position, and which, in its position lifted off of the further valve seat (40), releases at least one further flow cross-section,
e) with applied parking brake and simultaneously actuated service brake having service brake pressures which are less than a pressure threshold, and/or having service brake pressure gradients which are less than a pressure gradient threshold, the one piston (38) is lifted off of the valve seat (36) and the further piston (42) forms a seal against the further valve seat (40).

2. The service brake and spring type brake cylinder according to Claim 1, **characterized in that** the one piston (38) is loaded in the opening direction by at least one spring element (58).

3. The service brake and spring type brake cylinder according to Claim 1 or 2, **characterized in that** the one piston (38) has a central through hole (66), which connects the spring chamber (14) to a pressure side of the further piston (42), whose other pressure side is loaded by the service brake pressure.

4. The service brake and spring type brake cylinder according to Claim 3, **characterized in that** the further piston (42) is guided so it is axially movable on the one piston (38).

5. The service brake and spring type brake cylinder according to at least one of the preceding claims, **characterized in that** the valve seats (36, 40) are formed by axial faces, against which the pistons (38, 42) may hit axially.

6. The service brake and spring type brake cylinder according to Claim 5, **characterized in that** the further valve seat (40) is implemented on the one piston (38).

## Revendications

1. Cylindre combiné de frein de service et de frein à accumulateur (1) comprenant :
a) une membrane (24) disposée à l'intérieur d'un carter dudit cylindre de frein de service (2) et apte à être soumise à la pressurisation, qui limite, d'un côté, une chambre de frein de service (20) apte à être soumise à une pression de freinage et, d'autre côté, une chambre recevant un ressort de rappel (30),
b) un piston de frein à accumulateur (8) disposé à l'intérieur d'un carter dudit cylindre de frein à accumulateur (4), qui est apte à être actionné moyennant un ressort accumulateur (10) et qui limite, d'un côté, une chambre de frein à accumulateur (12) et, d'autre côté, une chambre de ressort (14) recevant un ressort accumulateur (10) et qui comprend une tige de piston (18) portant une soupape d'évacuation (16), laquelle établit ou bloque une communication d'écoulement entre ladite chambre de ressort (14) et ladite chambre de frein de service (20),
(c) dans lequel ladite soupape d'évacuation (16) renferme un piston (38) coopérant avec une siège de soupape (36), lequel est chargé par la pression régnant dans ladite chambre de ressort (14) en sa position d'ouverture et libère une section transversale d'écoulement en sa position enlevée de ladite siège de soupape,
**caractérisé en ce que**
d) ladite soupape d'évacuation renferme au moins un autre piston (42) supplémentaire, coopérant avec une autre siège de soupape (40), qui est chargé par la pression régnant dans ladite chambre de ressort (14) en sa position d'ouverture et par la pression dans ladite chambre de frein de service (20) en sa position de fermeture, lequel piston (38) libère au moins une autre section transversale d'écoulement en sa position enlevée de ladite autre siège de soupape (40),
e) audit premier piston (38) étant enlevé de ladite siège de soupape (36) quand le frein d'arrêt est serré et le frein de service est actionné au même temps aux pressions de freinage de service, qui sont plus petites qu'une limite de pression, et/ou aux gradients de pression de freinage de service, qui sont inférieurs à une limite de gradient de pression, et audit autre piston (42) étanchant contre ladite autre siège de soupape (40).

2. Cylindre de frein de service et de frein à accumulateur selon la revendication 1, **caractérisé en ce que** ledit premier piston (38) est chargé en sens d'ouverture par au moins un élément de ressort (58).

3. Cylindre de frein de service et de frein à accumulateur selon la revendication 1, **caractérisé en ce que** ledit premier piston (38) présente un alésage de passage (66) qui établit la communication entre ladite chambre de ressort (14) et un côté d'attaque de poussée dudit autre piston (42) dont l'autre côté d'attaque de poussée est chargé par la pression de freinage de service.

4. Cylindre de frein de service et de frein à accumulateur selon la revendication 3, **caractérisé en ce que** ledit autre piston (42) est guidé audit premier piston (38) à mouvement axial.

5. Cylindre de frein de service et de frein à accumulateur selon au moins une quelconque des revendications précédentes, **caractérisé en ce que** lesdites sièges de soupape (36, 40) sont formées par des aires axiales contre lesquelles lesdits pistons (38, 42) peuvent s'appuyer en sens axial.

6. Cylindre de frein de service et de frein à accumulateur selon la revendication 5, **caractérisé en ce que** ladite autre siège de soupape (40) est formée audit premier piston (38).
